Europäisches Patentamt

European Patent Office

Office européen des brevets

(11) Veröffentlichungsnummer: **0 486 756 A1**

# EUROPÄISCHE PATENTANMELDUNG

(21) Anmeldenummer: **91109598.2**

(22) Anmeldetag: **12.06.91**

(51) Int. Cl.5: **F27B 9/24**, B65G 25/06

(30) Priorität: **22.11.90 DE 4037163**

(43) Veröffentlichungstag der Anmeldung:
**27.05.92 Patentblatt 92/22**

(84) Benannte Vertragsstaaten:
**BE CH DE ES FR GB IT LI SE**

(71) Anmelder: **Heraeus Quarzglas GmbH**
**Quarzstrasse Postfach 1554**
**W-6450 Hanau(DE)**

(72) Erfinder: **Sussmann, Ulrich**
**Finkenweg 5**
**W-6463 Freigericht 1(DE)**
Erfinder: **Reul, Kurt**
**Weiher 2**
**W-6466 Mittel-Gründau(DE)**

(74) Vertreter: **Grimm, Ekkehard**
**Zentralbereich Patente u. Lizenzen,**
**Heraeusstrasse 12-14**
**W-6450 Hanau/Main(DE)**

(54) **Fördereinrichtung für einen Durchlaufofen.**

(57) Fördereinrichtungen für einen Durchlaufofen mit einer oder mehreren Heizzonen zur Wärmebehandlung, insbesondere von plattenförmigen Teilen, die parallel zueinander verlaufende, ein Transportband mit einer Auflage-Ebene (4) bildende Endlos-Seile (6), eine Antriebseinheit (3) für das Transportband (1) sowie Umlenkelemente (2) für die Endlos-Seile (6) aufweisen. Die Fördereinrichtung ist so aufgebaut, daß die beiden Enden jedes Endlos-Seiles (6) jeweils mittels eines Verbindungselementes (7) miteinander verbunden sind, daß die Antriebseinheit eine Einrichtung zur Bewegungsumkehr des Transportbandes (1) aufweist, wobei die mögliche Bewegungslänge des Transportbandes (1) in jeder Richtung bestimmt ist von dem kürzesten Abstand zweier Umlenkelemente (2), zwischen denen sich Verbindungselemente (7) befinden, daß im Bereich mindestens eines Teil-Abschnittes des Transportbandes (1), der in der Auflage-Ebene (4) verläuft, über dessen Länge sich erstreckend eine Hebeanordnung (8) mit einer ebenen Auflagefläche angeordnet ist, die im wesentlichen aus jeweils in den Räumen zwischen den Endlos-Seilen (6) liegenden langgestreckten Trägerelementen besteht, wobei die Ablagefläche der Hebeanordnung (8) parallel zu der Auflage-Ebene (4) des Transportbandes (1) verläuft und daß die Hebeanordnung (8) mit einem Hub- und Senkmechanismus (9) verbunden ist, mittels dessen die Trägerelemente in einer Position ober- oder unterhalb des Transportbandes positionierbar sind.

Fig.1

Die vorliegende Anmeldung betrifft eine Fördereinrichtung für einen Durchlaufofen mit einer oder mehreren Heizzonen zur Wärmebehandlung, insbesondere von plattenförmigen Teilen, die parallel zueinander verlaufende, ein Transportband mit einer Auflage-Ebene bildende Endlos-Seile, eine Antriebseinheit für das Transportband sowie Umlenkelemente für die Endlos-Seile aufweist.

Solche Fördereinrichtungen sind allgemein bekannt. Eine Fördereinrichtung bzw. ein Durchlaufofen, der ein Endlos-Seil als mitlaufende Mittelunterstützung für Leiterplatten verwendet, ist aus der DE-PS 38 41 447 bekannt. Um einen definierten Seillauf zu erreichen, ist das Endlos-Seil über ein Führungsschwert abgestützt. Um ohne zusätzliche Abstützelemente auszukommen, ist es notwendig, das Endlos-Seil mit einer der zu transportierenden Masse entsprechenden Zugkraft zu beaufschlagen. Es ist üblich, die Enden solcher Endlos-Seile durch Verspleißen miteinander zu verbinden. Damit wird zwar ein relativ erschütterungsfreies Umlaufen der derart hergestellten Endlos-Seile erzielt, durch die Einwirkung der Zugspannung und durch die bei der Bewegung der Endlos-Seile durch den Durchlaufofen auftretenden hohen Temperaturen und Temperaturschwankungen lösen sich diese Verspleißungen jedoch im Laufe des Betriebes der Fördereinrichtungen. Das dadurch notwendig werdende Wechseln der Endlos-Seile ist mit einer teilweisen Demontage der Fördereinrichtung verbunden und deshalb sehr aufwendig. Die Endlos-Seile müssen entweder vor Ort verspleißt oder ähnlich einem Keilriemen fertig verspleißt montiert werden.

Der vorliegenden Erfindung liegt nun die Aufgabe zugrunde, eine Fördereinrichtung für einen Durchlaufofen anzugeben, bei welcher die Haltbarkeit der Endlos-Seile erhöht wird, ohne daß dadurch die Funktion der Fördereinrichtung beeinträchtigt wird.

Gelöst wird diese Aufgabe dadurch, daß die beiden Enden jedes Endlos-Seiles jeweils mittels eines Verbindungselementes miteinander verbunden sind, daß die Antriebseinheit eine Einrichtung zur Bewegungsumkehr des Transportbandes aufweist, wobei die mögliche Bewegungslänge des Transportbandes in jeder Richtung bestimmt ist von dem kürzesten Abstand zweier Umlenkelemente, zwischen denen sich Verbindungselemente befinden, daß im Bereich mindestens eines Teil-Abschnitts des Transportbandes, der in der Auflage-Ebene verläuft, über dessen Länge sich erstreckend eine Hebeanordnung mit einer ebenen Ablagefläche angeordnet ist, die im wesentlichen aus jeweils in den Räumen zwischen den Endlos-Seilen liegenden langgestreckten Trägerelementen besteht, wobei die Ablagefläche der Hebeanordnung parallel zu der Auflage-Ebene des Transportbandes verläuft und daß die Hebeanordnung mit einem Hub- und Senkmechanismus verbunden ist, mittels dessen die Trägerelemente in einer Position ober- oder unterhalb des Transportbandes positionierbar sind.

Verfahrensgemäß werden die auf der Auflage-Ebene des Transportbandes aufliegenden plattenförmigen Teile in Transportrichtung bewegt. Bevor oder während die Bewegungsrichtung des Transportbandes umgekehrt wird, hebt der Hubmechanismus der Hebeanordnung die plattenförmigen Teile in eine Position oberhalb des Transportbandes. Dort verbleiben die Teile während der Rückwärtsbewegung des Transportbandes, die notwendig ist, weil die Verbindungselemente der Endlos-Seile nur in einem durch zwei Umlenkelemente begrenzten Abschnitt des Transportbandes bewegt werden. Nach oder während der Beendigung der Rückwärtsbewegung positioniert der Senkmechanismus die Hebeanordnung in eine Position unterhalb des Transportbandes. Dadurch liegen die plattenförmigen Teile wieder auf der Auflage-Ebene des Transportbandes auf und werden in Transportrichtung weiterbewegt.

Durch die Verbindung der Enden der Endlos-Seile mit speziellen Verbindungselementen wird eine dauerhafte Befestigung erreicht und damit der Montage- und Zeitaufwand für eventuelle Reparaturen gesenkt. Durch die Bewegung der Verbindungselemente in einem Bereich zwischen zwei Umlenkelementen, in Verbindung mit der Bewegungsumkehr des Transportbandes und der höhenverstellbaren Ablagefläche der Hebeanordnung wird nur ein bestimmter Abschnitt des Transportbandes einer Erwärmung im Durchlaufofen ausgesetzt. Das hat den Vorteil, daß das Transportband nur geringen Temperaturschwankungen ausgesetzt ist, was sich auf die Haltbarkeit des Materials positiv auswirkt.

In einer besonders vorteilhaften Ausführung ist in Abhängigkeit von den Bewegungsumkehrungen des Transportbandes an dem einen Umkehrpunkt der Antriebseinheit der Hubmechanismus der Hebeanordnung und an dem anderen Umkehrpunkt der Antriebseinheit der Senkmechanismus eingeschaltet. Dadurch findet eine Hub- oder Senkbewegung der plattenförmigen Teile genau an den Umkehrpunkten des Transportbandes statt, so daß die zur Verfügung stehende Länge des Transportweges optimal ausgenutzt werden kann.

Es ist zweckmäßig, daß die Verbindungselemente der Endlos-Seile in dem selben, durch zwei Umlenkelemente begrenzten Abschnitt des Transportbandes angeordnet sind. Grundsätzlich könnten die Verbindungselemente auch in jeweils verschiedenen Abschnitten angeordnet sein. Eine solche Anordnung ist jedoch für eine einfache Montage der Endlos-Seile innerhalb der Fördereinrichtung nicht zweckmäßig.

Als vorteilhaft erweist es sich weiterhin, daß die Verbindungselemente in einem Abschnitt des Transportbandes angeordnet sind, der außerhalb des die plattenförmigen Teile aufnehmenden Abschnitts des Transportbandes liegt. Dadurch wird die Auflage dieser plattenförmigen Teile auf dem Transportband nicht behindert.

Eine weitere, vorteilhafte Ausgestaltung der Erfindung besteht darin, daß der Abstand zwischen den zwei Umlenkelementen, zwischen denen die Verbindungselemente angeordnet sind, mindestens dem Abstand zwischen den Mitten zweier Heizzonen des Durchlaufofens entspricht. Dadurch wird eine solche Taktbewegung des Transportbandes möglich, daß die plattenförmigen Teile von einer Beschickungsfläche außerhalb des Ofens in die erste Heizzone und dann mit jedem weiteren Takt in die nächste Heizzone bzw. wieder aus dem Ofen heraus transportiert und damit einer definierten Erwärmung ausgesetzt werden können.

Eine sichere Lagerung der plattenförmigen Teile während der Rückwärtsbewegung des Transportbandes wird dadurch erzielt, daß die Ablagefläche der Hebeanordnung in ihrer höchsten Stellung etwa 10 bis 20 mm über die Auflage-Ebene des Transportbandes hinausragt.

Für eine definierte Erwärmung der plattenförmigen Teile ist es weiterhin zweckmäßig, daß die Trägerelemente der Hebeanordnung aus gespannten Träger-Seilen gebildet sind, da hierbei die Auflagefläche minimiert ist.

In einer vorteilhaften Ausgestaltung der Erfindung sind die Träger-Seile und/oder die Endlos-Seile als Stahlseile ausgebildet. Dadurch wird eine gute mechanische und thermische Stabilität der Ablagefläche der Hebeanordnung und/oder der Auflage-Ebene des Transportbandes erreicht.

Sowohl hinsichtlich des Transports als auch der Erwärmung der plattenförmigen Teile erweist sich ein Abstand jeweils benachbarter Endlos-Seile voneinander von etwa 100 mm als zweckmäßig.

Im Hinblick auf eine eventuell notwendig werdende Wartung oder Instandhaltung der Endlos-Seile ist es von Vorteil, daß die Verbindungselemente die Endlos-Seile lösbar miteinander verbinden. Dadurch ist eine einfache Montage bzw. Demontage der Endlos-Seile "vor Ort" möglich.

Um die Endlos-Seile lösbar miteinander zu verbinden, gibt es mehrere Möglichkeiten. Als günstig hinsichtlich einer einfachen Handhabung hat es sich erwiesen, daß die Verbindungselemente der Endlos-Seile ineinandergreifende Haken sind. Es sind jedoch auch andere Verbindungen, wie z. B. Verschraubungen oder die Verwendung von Seilklemmen, möglich.

Eine weitere zweckmäßige Ausgestaltung der Erfindung ergibt sich dadurch, daß die Trägerelemente der Hebeanordnung parallel zu den Endlos-Seilen im Bereich der Auflage-Ebene angeordnet sind. Durch eine solche Anordnung wird verhindert, daß sich die plattenförmigen Teile bei Ineinandergreifen der Vertikal- und der Horizontalbewegung seitlich zur Transportrichtung verschieben können.

Ein Ausführungsbeispiel der Erfindung wird nachfolgend anhand der Zeichnung näher erläutert. In der Zeichnung zeigt

Figur 1    eine Seitenansicht der erfindungsgemäßen Fördereinrichtung in schematischer Darstellung,

Figur 2    eine Draufsicht auf die Fördereinrichtung entsprechend Figur 1,

Figur 3a    einen Schnitt in Richtung der Sichtpfeile I aus Figur 2 durch die Fördereinrichtung mit unterhalb des Transportbandes positionierter Ablagefläche der Hebeanordnung und

Figur 3b    einen Schnitt in Richtung der Sichtpfeile I aus Figur 2 durch die Fördereinrichtung mit oberhalb des Transportbandes positionierter Ablagefläche der Hebeanordnung.

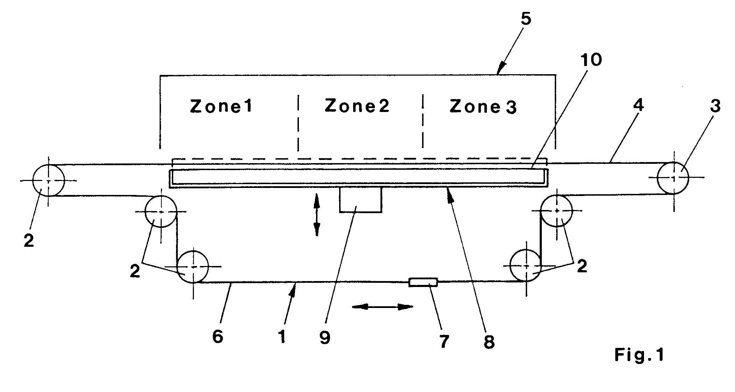

Die Fördereinrichtung, wie sie in Figur 1 zu sehen ist, besitzt ein Transportband 1 , welches über Umlenkelemente 2 geführt und von einer Antriebseinheit 3 bewegt wird. Das Transportband weist eine Auflage-Ebene 4 auf, auf welcher aufliegend die zu behandelnden plattenförmigen Teile, z. B. glasmattenverstärkte Thermoplaste, durch einen Durchlaufofen 5 geführt werden.

Das Transportband 1 besteht aus Endlos-Seilen 6 aus Stahl, die im Abstand von jeweils 100 mm nebeneinander angeordnet sind und deren Enden jeweils miteinander durch Verbindungselemente 7, die durch ineinandergreifende Haken gebildet sind, verbunden sind. Die Verbindungselemente 7 sind in einem Abschnitt des Transportbandes 1 angeordnet, der parallel zur Auflage-Ebene 4 des Transportbandes 1 verläuft und etwas länger ist, als die Strecke zwischen den Mitten zweier Zonen des Durchlaufofens 5.

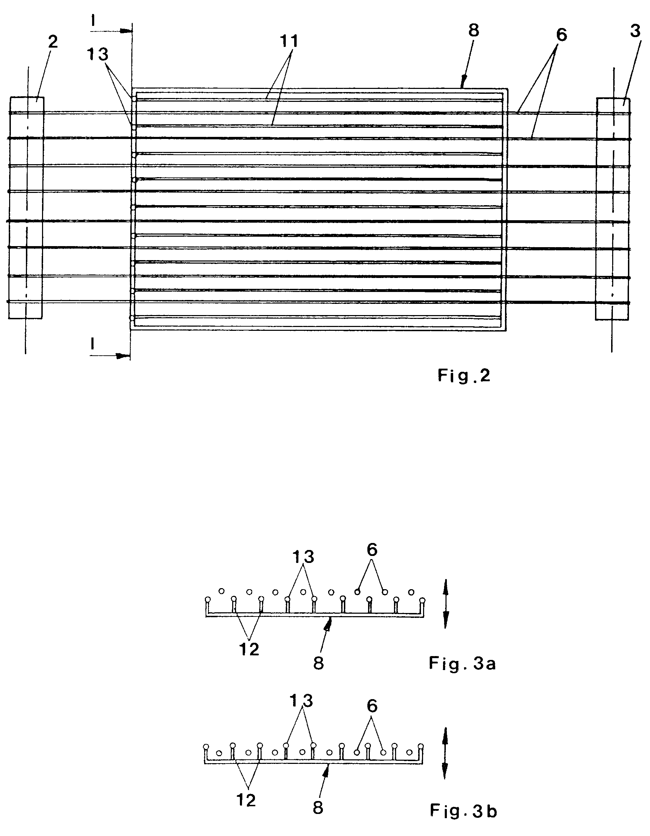

Im Bereich der Auflage-Ebene 4 und sich über fast die gesamte Länge des Durchlaufofens 5 erstreckend befindet sich eine Hebeanordnung 8 mit einem Hub- und Senkmechanismus 9 und einer Ablagefläche 10. Der Hub- und Senkmechanismus 9 positioniert die Ablagefläche 10 der Hebeanordnung 8 entweder in einer Position unterhalb der Auflage-Ebene 4 des Transportbandes 1 oder in einer Position etwa 15 mm oberhalb der Auflage-Ebene 4. Dazu besteht die Ablage-Ebene 10 der Hebeanordnung 8, wie in Figur 2 gezeigt, aus parallel zueinander und parallel zu den Endlos-Seilen 6 des Transportbandes 1 verlaufenden Träger-Seilen 11 aus Stahl. Diese Trägerseile 11 werden an ihren Enden jeweils an senkrechten Stützen 12 befestigt (Figuren 3a und 3b) und von Spanneinrichtungen 13 in gespanntem Zustand gehalten. Sie sind in einem Abstand von jeweils 100 mm nebeneinander angeordnet.

Im Ruhezustand der Fördereinrichtung befindet sich die Ablagefläche 10 der Hebeanordnung 8 unterhalb der Auflage-Ebene 4 des Transportbandes 1. Nach Auflegen eines plattenförmigen Teiles auf die Auflage-Ebene 4 setzt die Antriebseinheit 3 das Transportband 1 in Bewegung und transportiert das plattenförmige Teil in den Bereich der Zone 1 des Durchlaufofens 5. Gleichzeitig bewegen sich die Verbindungselemente 7 der Endlos-Seile 6 bis zu einem in der Zeichnung nicht dargestellten herkömmlichen Schalter, beispielsweise einem Endlagenschalter. Bei dessen Betätigung durch die Verbindungselemente 7 ändert die Antriebseinheit 3 die Bewegungsrichtung des Transportbandes 1 und gleichzeitig wird der Hub- und Senkmechanismus 9 der Hebeanordnung 8 in Betrieb gesetzt. Bei Stillstand des Transportbandes am Umkehrpunkt wird dadurch die Ablagefläche 10 der Hebeanordnung 8 in eine Position oberhalb der Auflage-Ebene 4 gebracht (Figur 3b), wobei sie das plattenförmige Teil von der Auflage-Ebene 4 abhebt. Das Transportband 1 bewegt sich dann in seine Ausgangslage zurück. Dabei bewegen sich die Verbindungselemente 7 bis zu einem zweiten Schaltelement (Endlagenschalter), wobei der Abstand zwischen beiden Schaltelementen so groß ist, wie der Abstand zwischen den Mitten zweier benachbarter Heizzonen des Durchlaufofens 5. Der Abstand zwischen den beiden Umlenkrollen 2, zwischen denen die Verbindungselemente 7 angeordnet sind, ist dabei entsprechend größer. Bei Auslösung des zweiten Endlagenschalters durch die Verbindungselemente 7 wird die Bewegungsrichtung des Transportbandes 1 erneut geändert und gleichzeitig der Hub- und Senkmechanismus 9 der Hebeanordnung 8 in Betrieb gesetzt. Bei Stillstand des Transportbandes 1 am Umkehrpunkt senkt sich dadurch die Ablagefläche 10 der Hebeanordnung 8 in eine Position unterhalb der Auflage-Ebene 4 (Figur 3a), so daß das plattenförmige Teil wieder auf der Auflage-Ebene 4 aufliegt und in die Zone 2 des Durchlaufofens 5 befördert wird. Diese taktartige Bewegung wiederholt sich beliebig oft, so daß alle Heizzonen durchlaufen werden können. Vor jeder Vorwärtsbewegung des Transportbandes 1 kann ein neues plattenförmiges Teil vor der Heizzone 1 des Durchlaufofens 5 auf die Auflage-Ebene 4 gelegt werden.

**Patentansprüche**

1. Fördereinrichtung für einen Durchlaufofen mit einer oder mehreren Heizzonen zur Wärmebehandlung, insbesondere von plattenförmigen Teilen, die parallel zueinander verlaufende, ein Transportband mit einer Auflage-Ebene bildende Endlos-Seile, eine Antriebseinheit für das Transportband sowie Umlenkelemente für die Endlos-Seile (6) aufweist, dadurch gekennzeichnet, daß die beiden Enden jedes Endlos-Seiles (6) jeweils mittels eines Verbindungselementes (7) miteinander verbunden sind, daß die Antriebseinheit (3) eine Einrichtung zur Bewegungsumkehr des Transportbandes (1) aufweist, wobei die mögliche Bewegungslänge des Transportbandes (1) in jeder Richtung bestimmt ist von dem kürzesten Abstand zweier Umlenkelemente (2), zwischen denen sich Verbindungselemente (7) befinden, daß im Bereich mindestens eines Teil-Abschnitts des Transportbandes (1), der in der Auflage-Ebene (4) verläuft, über dessen Länge sich erstreckend eine Hebeanordnung (8) mit einer ebenen Ablagefläche (10) angeordnet ist, die im wesentlichen aus jeweils in den Räumen zwischen den Endlos-Seilen (6) liegenden langgestreckten Trägerelementen besteht, wobei die Ablagefläche (10) der Hebeanordnung (8) parallel zu der Auflage-Ebene (4) des Transportbandes (1) verläuft und daß die Hebeanordnung (8) mit einem Hub- und Senkmechanismus (9) verbunden ist, mittels dessen die Trägerelemente in einer Position ober- oder unterhalb des Transportbandes (1) positionierbar sind.

2. Fördereinrichtung nach Anspruch 1, dadurch gekennzeichnet, daß in Abhängigkeit von den Bewegungsumkehrungen des Transportbandes (1) an dem einen Umkehrpunkt der Antriebseinheit (3) der Hubmechanismus der Hebeanordnung (8) eingeschaltet ist und daß an dem anderen Umkehrpunkt der Antriebseinheit (3) der Senkmechanismus der Hebeanordnung (8) eingeschaltet ist.

3. Fördereinrichtung nach Anspruch 1 oder 2, dadurch gekennzeichnet, daß die Verbindungselemente (7) der Endlos-Seile (6) in demselben, durch zwei Umlenkelemente (2) begrenzten Abschnitt des Transportbandes (1) angeordnet sind.

4. Fördereinrichtung nach einem der Ansprüche 1 bis 3, dadurch gekennzeichnet, daß die Verbindungselemente (7) in einem Abschnitt des Transportbandes (1) angeordnet sind, der außerhalb des die zu behandelnden Teile aufnehmenden Abschnittes des Transportbandes (1) liegt.

5. Fördereinrichtung nach einem der Ansprüche 1 bis 4, dadurch gekennzeichnet, daß der Abstand zwischen den zwei Umlenkelementen (2), zwischen denen die Verbindungselemente (7) angeordnet sind, mindestens dem Abstand zwischen den Mitten zweier Heizzonen des Durchlaufofens (5) entspricht.

6. Fördereinrichtung nach einem der Ansprüche 1 bis 5, dadurch gekennzeichnet, daß die Ablagefläche (10) der Hebeanordnung (8) in ihrer höchsten Stellung ca. 10 bis 20 mm über die Auflage-Ebene (4) des Transportbandes (1) hinausragt.

7. Fördereinrichtung nach einem der Ansprüche 1 bis 6, dadurch gekennzeichnet, daß die Trägerelemente der Hebeanordnung (8) aus gespannten Träger-Seilen (11) gebildet sind.

8. Fördereinrichtung nach einem der Ansprüche 1 bis 7, dadurch gekennzeichnet, daß die Träger-Seile (11) und/oder die Endlos-Seile (6) Stahl-Seile sind.

9. Fördereinrichtung nach einem der Ansprüche 1 bis 8, dadurch gekennzeichnet, daß die Abstände benachbarter Endlos-Seile (6) voneinander jeweils etwa 100 mm betragen.

10. Fördereinrichtung nach einem der Ansprüche 1 bis 9, dadurch gekennzeichnet, daß die Verbindungselemente (7) die Endlos-Seile (6) lösbar miteinander verbinden.

11. Fördereinrichtung nach Anspruch 10, dadurch gekennzeichnet, daß die Verbindungselemente (7) der Endlos-Seile (6) ineinandergreifende Haken sind.

12. Fördereinrichtung nach einem der Ansprüche 1 bis 11, dadurch gekennzeichnet, daß die Trägerelemente (11) der Hebeanordnung (8) parallel zu den Endlos-Seilen (6) im Bereich der Auflage-Ebene (4) angeordnet sind.

Zone1  Zone2  Zone 3

3

4

10

5

8

7

9

1

6

2

Fig.1

Fig.2

Fig.3a

Fig.3b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 684 769 (J. WALLERIUS) <br> * Ansprüche; Figuren * <br> --- | 1,2 | F 27 B 9/24 <br> B 65 G 25/06 |
| Y | FR-A-2 607 232 (PALOMARES) <br> * Ansprüche; Figuren * <br> --- | 1,2 | |
| A | US-A-4 450 608 (J. BALAZS) <br> * Ansprüche; Figuren * <br> --- | 1,2 | |
| A | FR-A- 666 762 (SURGAZ) <br> --- | | |
| A | EP-A-0 372 164 (HERAEUS QUARZSCHMELZE) <br> & DE-A-3 841 447 (Kat. D) <br> --- | | |
| A | FR-A- 494 141 (FERGUSON FURNACE CY) <br> ----- | | |

RECHERCHIERTE SACHGEBIETE (Int. Cl.5)

F 27 B
C 21 D
C 03 B
B 65 G

Der vorliegende Recherchenbericht wurde für alle Patentansprüche erstellt

| Recherchenort | Abschlußdatum der Recherche | Prüfer |
|---|---|---|
| DEN HAAG | 28-08-1991 | COULOMB J.C. |

EPO FORM 1503 03.82 (P0403)